# EUROPEAN PATENT SPECIFICATION

(11) **EP 1 233 407 B1**
(45) Date of publication and mention of the grant of the patent: **15.11.2006**
(21) Application number: 02250392.4
(22) Date of filing: 21.01.2002
(51) Int. Cl.: G10L 15/26

(54) **Speech recognition with spatially built word list**
Spracherkennung mit geographisch erzeugter Wortliste
Reconnaissance vocale avec liste de mots construite géographiquement

(30) Priority: 15.02.2001 US 784660
(43) Date of publication of application: 21.08.2002
(73) Proprietor: Navteq North America, LLC, Chicago IL 60654 (US)
(72) Inventor: Khan, M. Salahuddin, Lake Forest, Illinois 60045 (US); Friederich, Matthew, Berwyn, Illinois 60402 (US)
(74) Representative: McLeish, Nicholas Alistair Maxwell

(56) References cited:
- EP-A- 0 661 688
- US-A- 6 112 174

## Description

### BACKGROUND OF THE INVENTION

The present invention relates to navigation systems that support automatic speech recognition for obtaining input from a user.

Navigation systems provide useful features, such as calculating routes to desired destinations and providing guidance for following the routes. In order to provide these features, navigation systems use geographic data that include information about the locations of roads and intersections, estimated travel times along road segments, the speed limits along roads, etc. Using these kinds of geographic data, programming included in a navigation system can find an optimal (e.g., fastest or shortest) route to a specified destination.

Although navigation systems provide many useful features, there exists room for improvements. One area in which there is room for improvement relates to the use of automatic speech recognition (ASR) for receiving a user's input. Some navigation systems allow a user to input commands and specify destinations by speech. These navigation systems include hardware, such as a microphone, and software, such as speech recognition programming, to receive the user's input.

When a user wishes to operate a navigation system to obtain route guidance to a desired destination, the user may identify the desired destination to the navigation system. The user may identify this desired destination by street address, city, or in some other way. In a navigation system that provides automatic speech recognition, the user may speak the address, including the street name and city into the microphone of the navigation system, e.g., "1420 WEST STATE STREET ... AURORA." In a navigation system that provides automatic speech recognition, algorithms operate by finding a best match between the spoken words (also referred to as "utterances") and a known list of words. Such algorithms may analyze a spoken utterance and compare it to each word in the list. Each word may be assigned a likelihood. The word with the highest likelihood is returned as the match, if the likelihood exceeds some threshold. If no likelihood exceeds the threshold, no match is found.

The analysis and comparison performed by ASR functions require significant system resources. In embedded systems with limited memory, the maximum size of a word list may be about 1500 names, and perhaps smaller. However, a typical navigation database may have thousands of names, such as point of interest (POI) names (e.g., "RICKY'S STEAK HOUSE"), place names (e.g., municipal and other government body names, such a "ILLINOIS", "CHICAGO", "ATLANTA"), and street names (e.g., "STATE STREET", "5^{TH} AVENUE", "ELM STREET", and so on). Thus, there are considerably more names than an ASR word list can contain.

One approach has been to introduce "category" words. For example, a word list, such as ("POI" "Place" "Street name"), could be provided. Then, the navigation system user would be required to first say "PLACE" before saying "MICHIGAN." The first word "PLACE" limits the next search to "places" (as opposed to "street names" or "POIs"). While this approach works well in some cases, it does not work well for other cases. For example, saying "Street name" to constrain a search within Germany, Chicago, or New York will still yield a candidate list too large for a small system to process. The same is true for POIs.

Another solution requires the driver to provide more word information. For example, "STREET NAME" "OAK PARK" will narrow the search to streets in "Oak Park." However, this approach also has drawbacks. For example, a driver wanting to go to "931 Lake Street" may not know whether the destination is in "Oak Park", "Chicago", or some other community. An out-of-town driver could not be expected to know the names of various suburban communities.

Accordingly, there is a need to improve how a navigation system handles speech recognition.

US 6112174 and EP 0661688 both disclose a speech recognition system for a navigation system that uses a selected one of a plurality of predetermined dictionaries, the selection being based on a geographical location.

### SUMMARY OF THE INVENTION

According to a first aspect of the invention, there is provided a method according to claim 1.

According to a second aspect of the invention, there is provided a system according to claim 9.

An embodiment of the present invention comprises a program and method for building a word list for use by an automatic speech recognition program in a vehicle navigation system. The automatic speech recognition program matches spoken words that describe geographic features, such as places, street names and points of interest, to entries in the word list. The word list contains a limited number of entries. In order to increase the likelihood that a word spoken by a user of the navigation system is included among the limited number of entries contained in the word list, the word list contains entries that correspond to the named geographic features closest to a current position of the vehicle. As the vehicle travels through a geographic area, the word list is rebuilt to include entries that correspond to the named geographic features closest to the new current vehicle position.

According to another embodiment, a portion of the word list is reserved for a limited number of entries that correspond to named geographic features that may not be close to the current vehicle position but which are included because of their popularity or importance.

### BRIEF DESCRIPTION OF THE DRAWINGS

Figure 1 is a block diagram illustrating components of a navigation system.
Figure 2 is a block diagram of some of the component software applications included in the navigation system of Figure 1.
Figure 3 is a flow chart showing operation of the automatic speech recognition word list builder program shown in Figure 2.
Figure 4 is a block diagram showing components of the active word list shown in Figures 2 and 3.
Figure 5 is a block diagram showing organization of portions of the geographic database used by the navigation system in Figure 1.
Figure 6 is a block diagram showing organization of a spatial index for geographic feature names included in the geographic database of Figure 5.
Figure 7 is a map of a geographic area and is used to illustrate operation of the automatic speech recognition word list builder program shown in Figure 2.
Figure 8 is a block diagram showing organization of an alternative embodiment for the spatial index for geographic feature names included in the geographic database of Figure 5.
Figures 9A-9D illustrate alternative embodiments for determining the area corresponding to which name pronunciation data are selected for the active word list.
Figure 10 illustrates an alternative embodiment for determining the threshold boundary used for determining when to rebuild the active word list.

### DETAILED DESCRIPTION OF THE PRESENTLY PREFERRED EMBODIMENTS

### I. EXEMPLARY NAVIGATION SYSTEM PLATFORM

### A. Overview

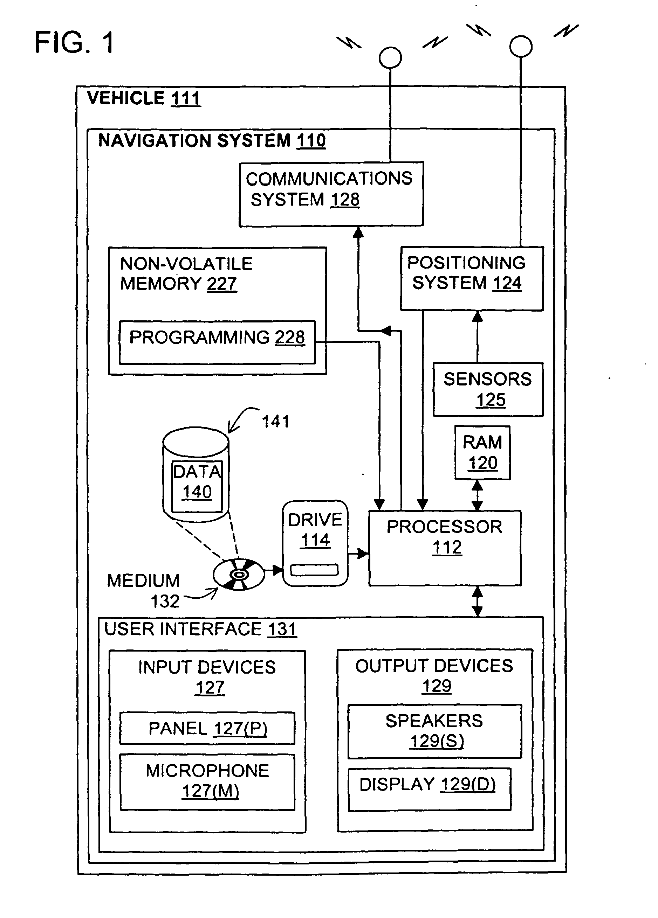

Referring to Figure 1, there is a diagram illustrating an exemplary embodiment of a navigation system 110. In the embodiment shown in Figure 1, the navigation system 110 is located in a vehicle 111, such as an automobile, truck, or bus. The navigation system 110 is a combination of hardware and software components. The hardware components of the navigation system 110 may include a processor 112, memory 120, and so on. In the embodiment of Figure 1, the navigation system 110 also includes a positioning system 124 that determines the position of the vehicle 111 in which it is installed. The positioning system 124 may include sensors 125 or other components that sense the speed, orientation, direction, angular acceleration, and so on, of the vehicle 111. The positioning system 124 may also include a GPS system.

The navigation system 110 also includes a user interface 131. The user interface 131 includes appropriate means 127 for receiving input from an end user of the navigation system. The input receiving means 127 may include a keyboard, keypad, or other type of input panel 127(P), a microphone 127(M), as well as other means for accepting end-user input, such as voice recognition software, and so on, through which the end user may request navigation information and services. The user interface 131 also includes appropriate means 129 for providing information back to the end user. The information providing means 129 may include a display 129(D) and speakers 129(S) (including speech synthesis hardware and software) through which the end user can be provided with information and services from the navigation system 110.

The navigation system 110 optionally includes a communications system 128. The communications system 128, if present, includes the appropriate hardware and software to send and receive data messages wirelessly. The communications system 128 may be implemented using any available technology for transmitting messages. The communications systems 128 is operatively coupled to other components of the navigation system 110 so that messages can be sent from and received by the navigation system.

All of the components described above may be conventional (or other than conventional) and the manufacture and use of these components are known to those of skill in the art.

### B. The geographic database

In order to provide navigation features to the end user, the navigation system 110 uses geographic data 140. The geographic data 140 include information about one or more geographic regions or coverage areas. The geographic data 140 may be stored in the vehicle 111 or alternatively, the geographic data 140 may be stored remotely and made available to the navigation system 110 in the vehicle 111 through the wireless communication system 128 which may be part of the navigation system 110. In another alternative, a portion of the geographic data 140 may be stored in the vehicle 111 and a portion of the geographic data 140 may be stored in a remote location and made available to the navigation system 110 in the vehicle 111 over the wireless communication system 128 from the remote location.

In the embodiment shown in Figure 1, some or all of the geographic data 140 are stored on a medium 132 which is located in the vehicle 111. Accordingly, the navigation system 110 includes a drive 114 (or other suitable peripheral device) into which the medium 132 can be installed and accessed. In one embodiment, the storage medium 132 is a CD-ROM disk. In another alternative embodiment, the storage medium 132 may be a PCMCIA card in which case the drive 114 would be substituted with a PCMCIA slot. Various other storage media may be used, including fixed or hard disks, DVD disks or other currently available storage media, as well as storage media that may be developed in the future.

The geographic data 140 include data specifying the positions of the roads in the covered geographic region(s). The geographic data 140 also include data relating to the roads, such as restrictions on directions of travel along the roads (e.g., one-way streets), street addresses along the roads, street names, speed limits along the roads, turn restrictions at intersections, and so on. The geographic data 140 may also include information about points of interest in the geographic area, such as hotels, restaurants, museums, stadiums, offices, automobile dealerships, auto repair shops, etc. The geographic data 140 may also include information about places, such as cities, towns, or other communities. The geographic data 140 may include other kinds of data about the geographic area.

The geographic data 140 may take a variety of different forms. In one embodiment, the geographic data 140 are in the form of one or more computer-readable data files or databases 141. Methods for forming and organizing a geographic database are disclosed in U.S. Pat. Nos. 5,953,722, 5,974,419 and 5,968,109. In one embodiment, the geographic database 141 contains a plurality of road segment data records. Each road segment data record represents a portion (or segment) of a navigable road in the geographic region. In one type of geographic database, there is at least one database entry (also referred to as "entity" or "record") for each represented road segment in a geographic region. A road segment data record may include a segment ID by which the record can be identified in the geographic database. Data attributes are associated with each road segment data record to describe features or characteristics of the represented road segment. The road segment data record may include attributes representing the speed limit along the road (or a speed limit range), the type of road (e.g., controlled access, ramp, bridge, tunnel, toll road, ferry, and so on), a functional rank, a permitted direction of travel, an address range, a name, a highway designation of the road of which the road segment is a part, and so on. The various attributes associated with a road segment may be included in a single road segment record, or may be included in more than one type of record that are cross-referenced to each other.

In one embodiment, the geographic data are provided by Navigation Technologies Corporation of Rosemont, Illinois. However, it is understood that the inventive concepts disclosed herein are not restricted to any particular source of data.

### C. The applications in the navigation system.

As shown in Figure 1, the navigation system 110 includes or uses software programming 228. The software programming 228 includes the programs and applications that provide for the functions and/or features performed by the navigation system 110. The software programming 228 uses the geographic data 140 in conjunction with input from the end user via the user interface 131, and possibly in conjunction with outputs from the positioning system 124, to provide various navigation-related features and/or functions.

The software programming 228 may be stored in a non-volatile storage medium 227 in the navigation system 110. Alternatively, the software programming 228 and the geographic data 140 may be stored together on a single storage device or medium. Alternatively, the software programming 228 may be located at a remote location and may be provided to or accessed by the navigation system 110 over the communications system 128.

In one embodiment, the software programming 228 is written in the C programming language although in alternative embodiments other programming languages may be used, such as C++, Java, Visual Basic, and so on.

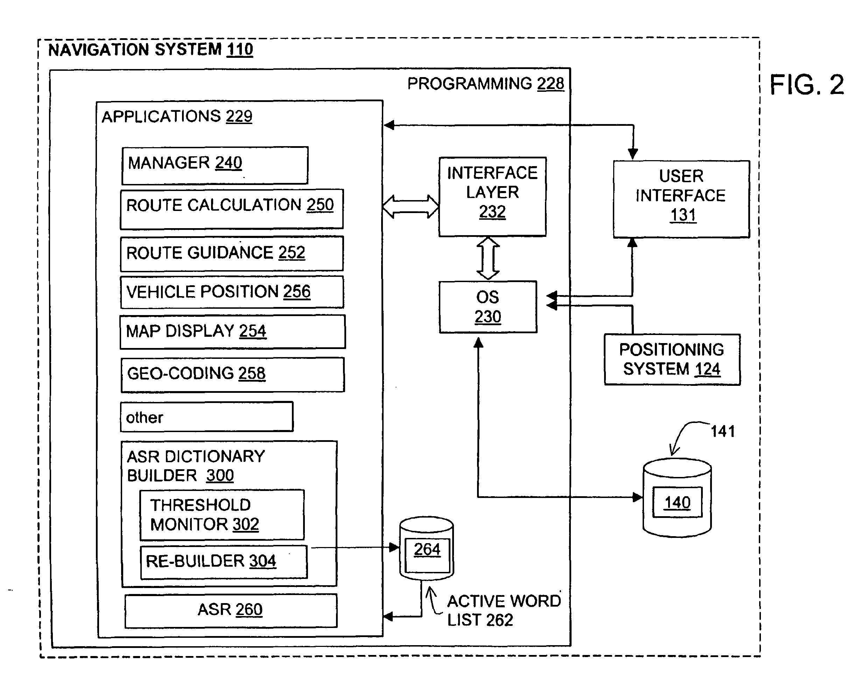

The software programming 228 may be formed of separate component applications 229 (also referred to as programs, subprograms, routines, or tools). The component applications 229 work together through defined programming interfaces. Figure 2 shows a block diagram illustrating some of the component applications 229 for one embodiment of the software programming 228 included in the navigation system 110 of Figure 1. In addition to the component applications 229 shown in Figure 2, the software programming 228 may include other component sub-routines or programs, such as an operating system 230 and a data access interface layer 232 as well as other programs. (An embodiment of a data access interface layer is described in U.S. Pat. No. 6,047,280).

In Figure 2, the applications 229 include an application manager 240. The application manager 240 is a program or routine that provides for overall management of the functions of the navigation system 110. The application manager 240 may also include support for and interfaces with the navigation system hardware, such as the positioning system 124 and the user interface 131. The software programming 229 includes user interface functions to interface with the user interface hardware 131. These user interface functions may provide for presenting a menu to the end user on the screen display 129(D) of the user interface hardware 131, accepting inputs from the end user via the input devices 127 of the user interface hardware 131, displaying results to the end user on the screen display 129(D) of the user interface hardware 131, and so on.

The applications 229 include sub-programs or routines that interface with the application manager 240 and that provide for specific navigation-related features or functions to be performed by the navigation system. These sub-programs include a route calculation application 250, a route guidance application 252, a map display application 254, a vehicle positioning application 256 and a geo-coding application 258. The software programming 228 may include other navigation applications in addition to these.

Methods for route calculation are disclosed in Ser. No. 09/047,698, filed March 25, 1998; methods for providing route guidance are disclosed in Ser. No. 08/893,201, filed July 15, 1997 and Ser. No. 09/196,279, filed November 19, 1998; methods for providing vehicle positioning are disclosed in Ser. No. 09/276,377, filed March 25, 1999; and methods for providing map display are disclosed in U.S. Pat. No. 6,163,749 and U.S. Pat. No. 6,092,076. The methods disclosed in these patents or applications represent only some of the ways that these functions can be provided and the subject matter claimed herein is not limited to any particular method. Any suitable method now known or developed in the future may be employed.

### D. The automatic speech recognition program.

The applications 229 also include an automatic speech recognition program 260. The automatic speech recognition program 260 operates under the control of the manager application 240. The automatic speech recognition program 260 receives a data representation of spoken words or utterances. (Capture of spoken words or utterances and conversion of the spoken words and utterances into data representations are performed by another component in the navigation system or another system, according to any process or equipment known to those of skill in the art or developed in the future.) The automatic speech recognition program 260 matches the data representation of spoken words to one or more entries in an active word list (or dictionary) 262. The automatic speech recognition program 260 uses any of several known algorithms for performing this matching.

The active word list 262 used by the automatic speech recognition program 260 contains word pronunciation data 264. The word pronunciation data 264 in the active word list 262 correspond to a plurality of distinct words. The entries in the active word list 262 correspond to the names of points of interest, places, street names, as well as commands, and so on.

In the embodiment of Figure 2, there are a limited number of distinct words or entries in the active word list 262. For example, the number of distinct words may be approximately 1000, 1500, 2000, or some other finite number. The number of distinct words contained in the active word list is constrained by several factors. One factor relates to the amount of memory available to the navigation system for performing automatic speech recognition. The amount of available memory affects the number of different words that can be distinguished at a time by automatic speech recognition algorithms. Some automatic speech recognition algorithms are limited to distinguishing only a limited number of different words, such as 1000, 1500, or 2000.

In general, the number of different names for geographic features that are represented in the geographic database 141 far exceeds the number of distinct words that can be contained in the active word list. Thus, the number of distinct words that the active word list 262 can hold represents only a portion, and in some cases a relatively small portion, of all the names of all the geographic features that are represented in the geographic database 141.

### II. THE ASR WORD LIST BUILDER PROGRAM

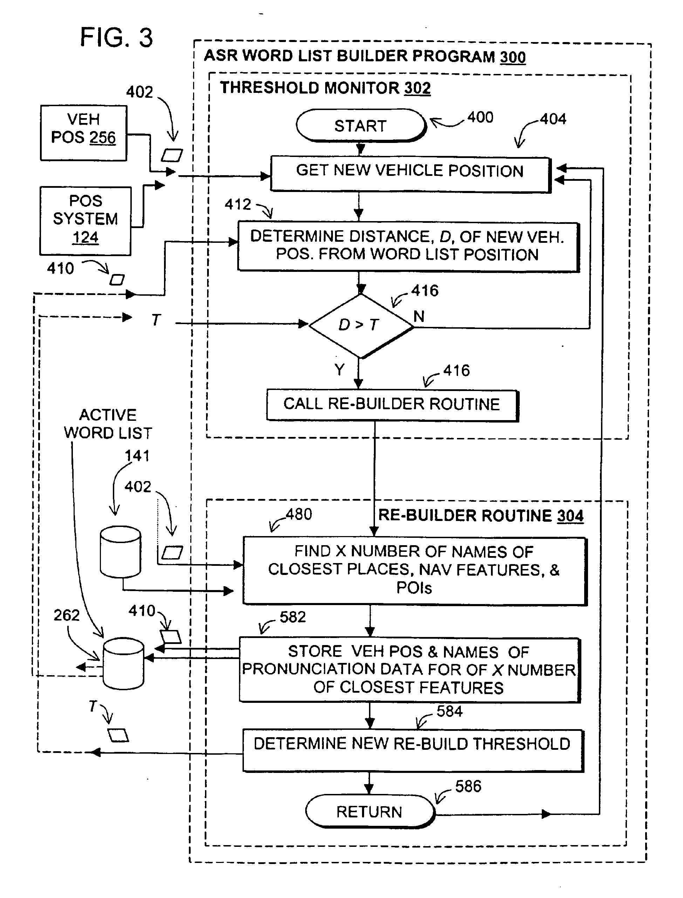

Referring to Figure 2, included among the applications 229 in the navigation system 110 is an ASR word list builder program 300. The ASR word list builder program 300 operates during runtime of the navigation system 110. The ASR word list builder program 300 builds and re-builds, as necessary, the active word list 262 used by the automatic speech recognition program 260. The ASR word list builder program 300 includes two components or functions. The ASR word list builder program 300 includes a threshold monitor routine 302 and a re-builder routine 304. Figure 3 shows steps performed by these components of the ASR word list builder program 300.

Referring to Figure 3, the threshold monitor routine 300 begins when the navigation system 110 is started or when the threshold monitor routine 300 is re-initialized (Step 400). The threshold monitor routine 302 obtains data 402 indicating the current vehicle position (Step 404). These data 402 may be obtained from the vehicle positioning application 256 or alternatively, the data 402 indicating the current vehicle position may be obtained from the positioning system 124. The data 402 indicating the current vehicle position may include the geographic coordinates of the vehicle position or alternatively, the data 402 indicating the current vehicle position may be referenced to the map data contained in the geographic database 141 that represent the road network.

Using the data 402 indicating the current vehicle position, the threshold monitor routine 302 determines the distance, *D*, between the current vehicle position and a position 410 associated with the active word list 262, if present (Step 412). If the distance, *D*, from the current vehicle position to the position 410 associated with the active word list does not exceed a threshold, *T*, the threshold monitor routine 302 loops back to Step 404 and obtains a new current vehicle position (Step 416). Then, the threshold monitor routine 302 continues, i.e., proceeding to the step in which the distance between the new current vehicle position and the position 410 associated with the active word list 262 is determined, and so on.

At Step 416, if the distance, *D*, from the current vehicle position to the position 410 associated with the active word list exceeds the threshold, *T*, the threshold monitor routine 302 calls the word list re-builder routine 304. When the re-builder routine 304 is called by the threshold monitor routine 302, it rebuilds the active word list 262. To perform this process, the re-builder routine 304 obtains the data 402 indicating the current vehicle position. These data 402 indicating the current vehicle position may be obtained from the vehicle positioning application 256, the positioning system 124, or the threshold monitor routine 302. When rebuilding the active word list 262, the re-builder routine 304 obtains from the geographic database 141 the name pronunciation data associated with named represented geographic features. The named represented geographic features for which name pronunciation data are obtained may include streets, places, and points of interest.

As mentioned above, the active word list 262 has a limited size. For example, the active word list 262 may be limited to approximately 1500 entries representing approximately 1500 different named geographic features. These 1500 geographic features may represent only a small portion of all the named geographic features represented in the geographic database 141 (especially if the geographic database represents a relatively large coverage area, such as the entire United States). Accordingly, it is preferred that the active word list 262 contain data for those named geographic features that are most likely to be needed. Therefore, when the re-builder routine 304 obtains name pronunciation data from the geographic database 141, it obtains the name pronunciation data associated with those represented features that are closest to the current vehicle position.

It is recognized that not all likely destinations are necessarily close to the current vehicle position. Instead, some named geographic features are possible likely destinations because of their popularity or importance even though they may be far away from the current vehicle position. Therefore, although the active word list 262 may have room for a specific number of entries, e.g., 1500, the re-builder routine 304 does not obtain from the geographic database name pronunciation data for all the possible entries in the active word list 262. Instead, a portion of the active word list 262 is reserved for name pronunciation data associated with represented named geographic features that are not close to the current vehicle position, but that are possible likely destinations because of their popularity or importance.

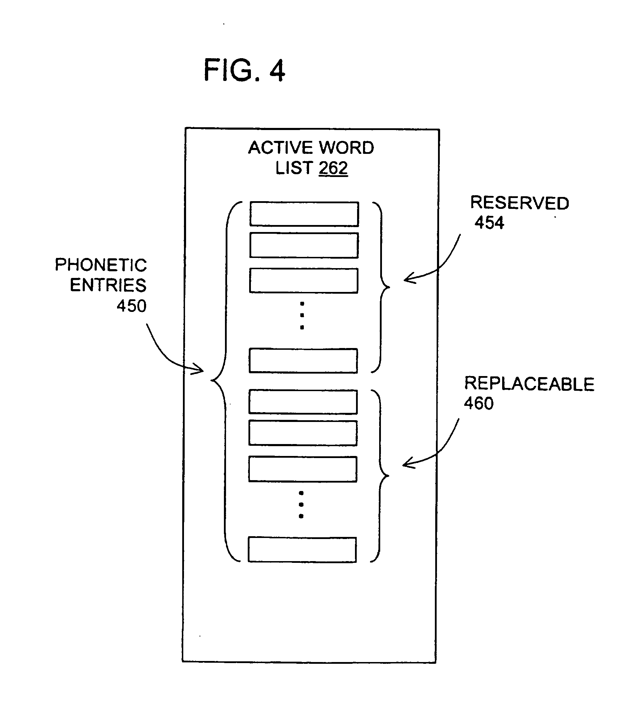

Figure 4 is a diagram that illustrates one embodiment of the organization of the active word list 262 that includes entries for named geographic features that are close to the vehicle position as well as entries for named geographic features that are not necessarily close to the vehicle position, but that are likely destinations because of their importance or popularity. In Figure 4, the active word list 262 is shown to have a plurality of entries 450. Each entry represents the phonetic pronunciation of a name of a particular represented geographic feature. The active word list 262 maintains two types of entries: reserved entries 454 and replaceable entries 460. The reserved entries 454 in the active word list 262 contain the name pronunciation data for represented features that are possible likely destinations, even though they are relatively far away. For example, the reserved entries 454 in the active word list 262 contain name pronunciation data for common popular destinations, such as "NEW YORK", "DISNEYLAND", "LAS VEGAS", "GRAND CANYON", "BROADWAY", "5^{TH} AVENUE", and so on. These geographic features, even though they may be far away from the current position of the vehicle, are often visited by people or are well known, and therefore are likely destinations. Thus, the name pronunciation data for these features are included in the active word list 262.

In one embodiment, the reserved entries on the active word list are static. However, in another embodiment, the reserved entries on the active word list are dynamic and may be updated on a regular basis or each time the system is run. The entries on the reserved list may also be weighted.

The reserved entries may also contain command and control words, such as "SCROLL MAP", "RECALCULATE", "CANCEL", etc.

The replaceable entries 460 in the active word list 262 in Figure 4 also contain name pronunciation data for represented features. However, the replaceable entries 460 in the active word list 262 are the names of geographic features that are closest to the current vehicle position. (Note that in Figure 4, the reserved entries 454 are shown as being separate from the replaceable entries 460. In the active word list 262, the reserved entries 454 and the replaceable entries 460 may not necessarily be organized as separate collections of entries, but instead may be organized in a suitable manner for use by the automatic speech recognition program 260.)

Referring back to Figure 3, when the re-builder routine 304 rebuilds the active word list 262, it obtains name pronunciation data from the geographic database 141 (Step 480). As mentioned above, the active word list 262 has a limited size and, in a present embodiment, some of the entries in the active word list 262 are reserved and therefore not replaceable. Thus, in the present embodiment, there are limited number of entries (e.g., "*X*") that are available in the active word list 262 for replacement by the re-builder routine 304. Accordingly, the re-builder routine 304 uses the data 402 indicating the current vehicle position to obtain name pronunciation data from the geographic database 141 for only those geographic features that are closest to the current vehicle position. More specifically, the re-builder routine 304 obtains name pronunciation data for the *X* number of closest named geographic features. In the embodiment of Figure 4, *X* is the remainder of available entries in the active word list 262 after subtracting the number of reserved entries from the total number of entries available in the active word list. (In one embodiment, the number of entries available for replacement, i.e., *X*, is approximately 1000, but alternatively, the number of entries available for replacement may be any other number, consistent with the hardware and software resources of the navigation system. In alternative embodiments, the number may be configurable.)

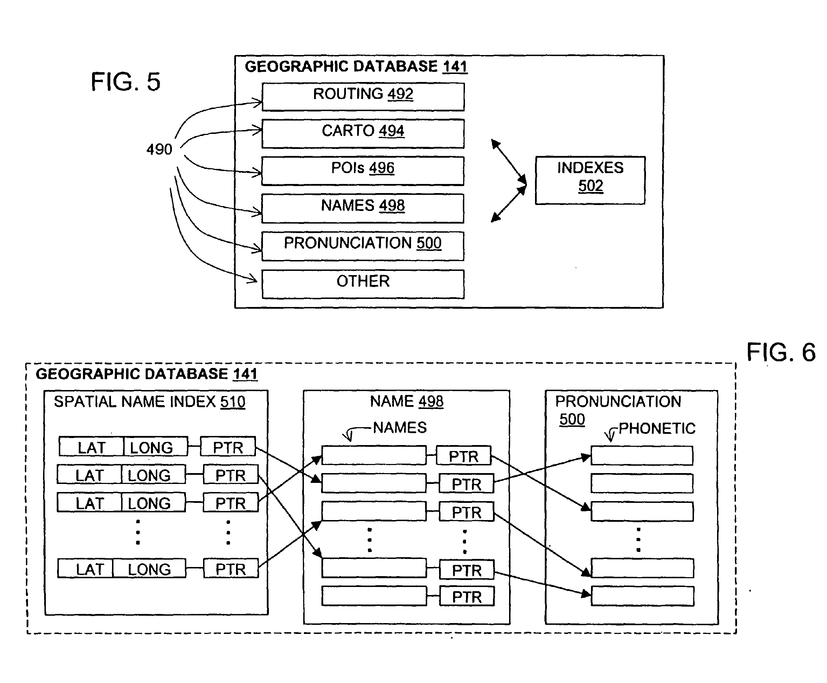

In order to facilitate operation of the re-builder routine 304, the geographic database 141 is organized in a manner that facilitates finding the name pronunciation data for geographic features spatially. Figures 5 and 6 illustrate an arrangement in which the geographic database 141 can be organized in order to facilitate identifying name pronunciation data for geographic locations based upon the proximity of the geographic data from a selectable position. In Figure 5, the geographic database 141 is shown as being organized into different types or sets of data 490. These types or sets 490 include routing 492, cartographic 494, points of interest 496, names 498 and pronunciation 500. The geographic database 141 may include other types of data in addition to these. (These types of data may be provided as actual separate physical collections or alternatively, these types of data may be intermingled or interleaved with each other.) These different kinds of data 490 may represent the same geographic features. However, each of these different types of data contains different attributes of these features. As an example, the routing type of data 492 includes those attributes about road segments that relate to calculation of routes between locations. The cartographic data 494 includes those attributes about road segments, as well as other geographic features, that are used to display the features as a graphical map. The name data 498 contains the names (e.g., in text) of the navigable features, such as roads. The name data 498 may also include the names of other types of geographic features, such as places (e.g., cities, states, neighborhoods), points of interests, and other types of geographic features (e.g., rivers, lakes, mountain ranges). The pronunciation data 500 includes phonetic representations for each of the different names included in the name data 498.

Each of the different navigation system applications (e.g., route calculation 252, route guidance 254, map display 256, automatic speech recognition 260, and so on, in Figure 2) uses one or more of the different types 490 of data when operating. In order to enable navigation system applications to use these different types of data, the geographic database 141 includes one or more indexes 502 that relate these different types of data to each other.

As shown in Figure 6, to facilitate operation of the re-builder routine 304, the geographic database 141 includes a spatial name index 510. The spatial name index 510 is one of the indexes 502 in the geographic database 141 that relate the different types of data to each other. The spatial name index 510 supports decreasing density radial name searches. The spatial name index 510 can be used to order names by proximity to a specified location. For example, in the spatial name index 510, the references to the names could be Peano-key order, or alternatively, other suitable spatial ordering may be used. In addition, the spatial name index 510 can be used to order names falling along a vector or to order names located between two points.

Referring again to Figure 3, using the data 402 indicating the current vehicle position, the re-builder routine 304 obtains from the geographic database 131 the pronunciation data for the *X* number of named geographic features that are closest to the current vehicle position (Step 480). The pronunciation data that are obtained from the geographic database are stored in the active word list 262 (Step 582). The pronunciation data obtained from the geographic database 141 replace the replaceable entries 460 contained in the active word list 262. The re-builder routine 304 does not replace the reserved entries 454. After replacing the replaceable entries 460 in the active word list 262 with new pronunciation data, the active word list 262 contains the pronunciation data, which had been newly obtained from the geographic database 141, as a new set of replaceable entries 460. The active word list 262 also contains the same reserved entries 454 as before.

When the re-builder routine builds the new active word list 262, it may store some or all of the new active word list in a non-volatile, re-writable memory in the navigation system. Alternatively, when the re-builder routine builds the new active word list, it may maintain some or all of the new active word list in RAM.

When the re-builder routine 304 rebuilds the active word list 262 by replacing the replaceable entries 460 with new name pronunciation data corresponding to the *X* closest named geographic features, the re-builder routine 304 also updates the data 410 indicating the location associated with the active word list. The data 410 may be the position of the vehicle when the active word list was re-built. The re-builder routine 304 stores the data 410 indicating a location associated with the active word list 262 so that the active word list can be rebuilt as necessary to include pronunciation data for those named geographic features that are most closely located to the vehicle's position as the vehicle travels in a geographic area. The data 410 may be stored with the active word list 262, either in the non-volatile, re-writable data storage or in RAM. The data 410 indicating the location associated with the build of the active word list 262 may be stored with the active word list, e.g., as part a file header.

As stated above, as the vehicle travels away from the location at which the active word list was built (or re-built), the threshold monitor routine 302 monitors how far the vehicle has traveled from the location at which the active word list was built. As stated above, when this distance exceeds a threshold distance, *T*, the threshold monitor routine 302 calls the re-builder routine when the distance exceeds the threshold.

The threshold distance, *T*, may be fixed or configurable. Alternatively, the threshold distance, *T*, may be calculated as a function of other parameters, such as vehicle speed, administrative boundary, direction, etc. According to another alternative shown in Figure 3, the threshold distance, *T*, is related to the density of the geographic features around the location at which the active word list was built (Step 584).

The reason why the threshold distance, *T*, is related to the density of the geographic features around the location at which the active word list was built is that some parts of a geographic region are more densely-featured than other parts. For example, an urban area contains more streets and businesses than a rural area. However, as previously indicated, the number of replaceable entries 460 in the active word list is limited to some fixed (or configurable) number, i.e., *X*. As a result, when the re-builder routine 304 obtains the pronunciation data for the *X* number of closest named geographic features, the size of the geographic area corresponding to these *X* number of names is relatively smaller in densely-featured areas, such as cities, and relatively larger in sparsely-featured areas, such as rural areas and suburbs. Thus, when the vehicle is traveling across a densely-featured area, the need to re-build the active word list arises after traveling less distance than when the vehicle is traveling across a sparsely-featured area.

In order to account for the need to re-build the active word list more frequently (with respect to distance traveled) when traveling across densely-featured areas, the threshold distance *T* used to determine when to re-build the active word list can be made a function of the density of the named features around the location at which the active word list is re-built. One way this can be accomplished is to determine the outer boundary of the area around the location at which the active word list is re-built that encompasses the *X* closest named geographic features. The threshold distance, *T,* is then determined as a fraction (e.g., 1/2, 1/3, etc.) of the distance from the location at which the active word list was re-built to the outer boundary. Thus, as long as the vehicle travels relatively close to the location at which the active word list was re-built, there is no need to re-build the active word list. However, as the vehicle approaches the boundary, the need to re-build the active word list arises. Therefore, by relating the size of the re-build threshold *T* to the size of the area covered by the names in the active word list, the active word list is re-built when appropriate in order to maintain those names of the closest, and therefore most likely, geographic features.

After the re-build routine 304 determines the new re-build threshold distance, *T*, the re-build routine 304 stores the data indicating the new threshold distance. The data indicating the new threshold distance, *T*, may be stored with the active word list, e.g., as part the file header, or elsewhere in a memory or data storage of the navigation system. After the re-build routine 304 has stored these data, the re-build routine 304 returns to the threshold monitor routine 302 (Step 586).

The name pronunciation data in the active word list 262 are now available for use by the automatic speech recognition program (260 in Figure 2). The threshold monitor routine 302 then continues to operate by obtaining a new vehicle position (Step 404 in Figure 3) and determining the distance from the new vehicle position to the newly determined position 410 associated with the re-built active word list (Step 412).

### Example

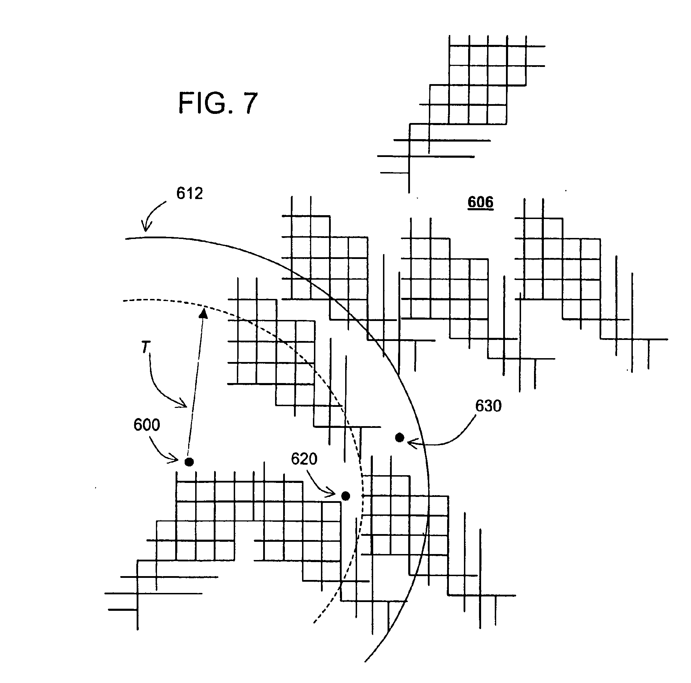

Referring to Figure 7, the vehicle 111 in which the navigation system 110 is installed is located at a position 600 in a geographic area 606. When the vehicle 111 is at the position 600, the navigation system 110 is started. The threshold monitor routine 302 (in Figure 3) starts, obtains the current position of the vehicle 111 from the vehicle positioning application 256 and determines the distance from the current vehicle position to the position associated with the active word list. In this case, there is no active word list since the vehicle has just been turned on. Therefore, the threshold monitor routine 302 calls the re-builder routine 304.

The re-builder routine 304 (in Figure 3) obtains from the geographic database 141 pronunciation data for the geographic features located closest to the current vehicle position 600. The re-builder routine 304 adds these pronunciation data to the pronunciation data for the reserved entries to form a new build of the active word list 262. When the re-builder routine 304 obtains name pronunciation data from the geographic database to rebuild the active word list, it obtains the name pronunciation data for those named geographic features that are located closest to the current vehicle position 600. Taking into account the limited size of the active word list and the number of reserved entries, the pronunciation data obtained from the geographic database for the named geographic features located closest to the current vehicle position extend out to the boundary indicated by the line 612. Thus, the active word list contains pronunciation data for all the named geographic features encompassed within the boundary 612. (In addition, as indicated above, the active word list contains pronunciation data for certain named geographic features that may be located outside the boundary 612, but that are likely destinations by reason of being popular or important destinations.)

When the re-builder routine 304 rebuilds the active word list, it stores data indicating the position (i.e., "600") associated with the build. The re-builder routine 304 also stores data indicating the threshold distance (i.e., *T*) which may be related to the distance from the position 600 to the boundary 612. When the active word list has been re-built, the automatic speech recognition program 260 (in Figure 2) can use the data contained therein for speech recognition purposes.

Continuing to refer to Figure 7, the vehicle 111 then travels to the position 620. As the vehicle is traveling to the position 620, the threshold monitor routine 302 obtains the current vehicle position, determines the distance from the current vehicle position to the position associated with the active word list, and compares the distance to the threshold distance. When the vehicle is at the position 620, the distance from the current vehicle position 620 to the position associated with the active word list is less than the threshold distance. Therefore, the active word list that was built at the position 600 continues to be used by the automatic speech recognition program.

Continuing to refer to Figure 7, the vehicle 111 then travels to the position 630. When the vehicle 111 is at the position 630, the distance from the current vehicle position 620 to the position associated with the active word list exceeds the threshold distance. Therefore, the active word list that was built at the position 600 is no longer valid and the re-builder routine 304 is called to re-build the active word list 262.

### III. ALTERNATIVE EMBODIMENTS

Some navigation systems are standalone devices. In a standalone navigation system, all the hardware, software and data are present locally in the system. Another kind of navigation system has some or all of the software and/or data (including corresponding hardware) located remotely. In this type of navigation system, the functions and/or data that are located remotely are made available to the components of the navigation system that are located locally over a communications medium, which may be a wireless medium. The disclosed concepts relating to building of an active word list are applicable to standalone navigation systems, navigation systems that rely on remotely located data and/or software, and well as hybrid systems that combine locally stored data and/or software with remotely stored data/or software.

Navigation system may be dedicated devices. Navigation systems may be installed in vehicles. These in-vehicle navigation systems include systems installed by the automobile manufacture as well as after-market installed systems. Navigation functions can also be provided by general purpose computing devices, such as personal computers (including laptop computers) and personal digital assistants. The disclosed concepts relating to building of an active word list for speech recognition are applicable to dedicated systems and systems implemented on general purpose devices.

In one of the embodiments described above, the active word list was described as including two types of entries: reserved entries and replaceable entries. In an alternative embodiment, the active word list can contain more than two types of entries. As an example, the active word list may contain three or more different kinds of entries. In one alternative embodiment, a third type of entry combines aspects of the replaceable entry and the reserved entry. According to this embodiment, the third type of entry corresponds to names of geographic places that are beyond the immediate threshold of closest geographic features, but still are related to the vehicle position. As an example, "WACKER DRIVE" is the name of a street in downtown Chicago. "WACKER DRIVE" is a likely destination for a navigation system user in the Chicago metropolitan area. However, "WACKER DRIVE" is not a likely destination for navigation system users outside the Chicago metropolitan area. Accordingly, the pronunciation data for "WACKER DRIVE" is not a reserved entry because it is not a likely destination for navigation system users outside Chicago. However, because the Chicago metropolitan area has a large number of named geographic features, there are places in the Chicago metropolitan area where the word list builder program operating in a navigation system would use all the available replaceable entries in a active word list, but not include "WACKER DRIVE" because it would not be among the *X* number of closest named geographic features. According to this alternative embodiment, the third category of entries in the active word list would include pronunciation data for these types of geographic features. To implement this, a second distance threshold (e.g., *T(2)*) can be used for selection of these named geographic features.

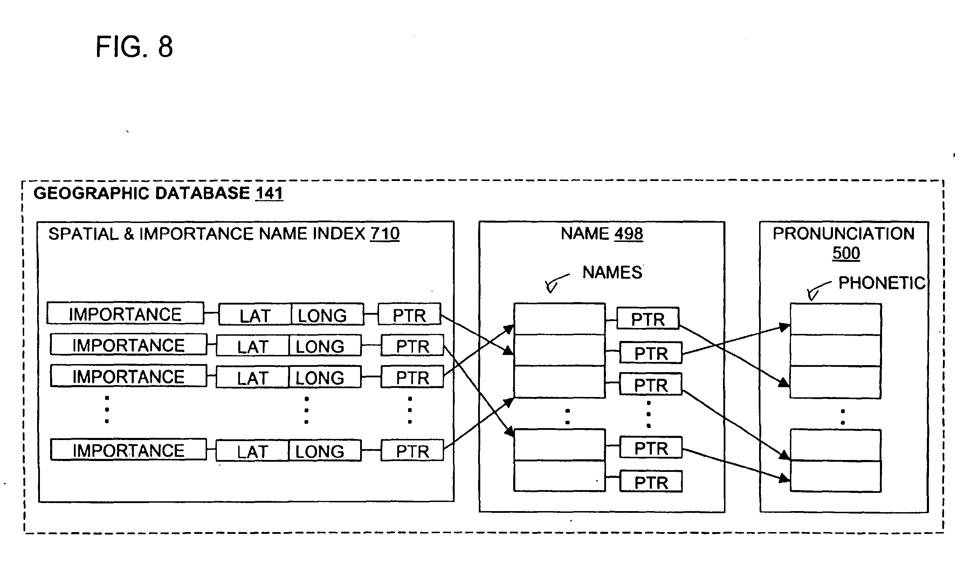

In another alternative embodiment, instead of forming the active word list with reserved entries and replaceable entries, all the entries can be replaceable. According to this embodiment, included with the name data in the geographic database is an attribute field that is used to indicate the importance of the represented named geographic feature. In one embodiment, the importance field can include a number from 0-7. Residential street names and other local features, such as non-chain restaurants, are assigned an importance rating of 0. Business streets are assigned an importance rating of 2. City names, streets and points of interest that are important across a metropolitan area are assigned a rating of 5. Streets and destinations that are important across a metropolitan area are assigned a rating of 5. Streets and destinations that are important nationally are assigned a rating of 7. Figure 8 is an example of the components in an alternative embodiment of the geographic database 141 that includes an importance attribute associated with named geographic features. According to this embodiment, when the re-build routine is called to re-build the active word list, all the entries are replaced. When determining which entries to include when re-building the active word list, the re-builder routine uses a plurality of factors that combines the distance of the named geographic feature from the current position of the vehicle and the importance of the named geographic feature. With this embodiment, by proper scaling of the factors, a geographic feature having an importance rating of 7 will always be included in the active word list.

In the above embodiments, the active word list was described as being used by the automatic speech recognition program. In an alternative embodiment, the active word list may also be used for speech generation (synthesis) purposes.

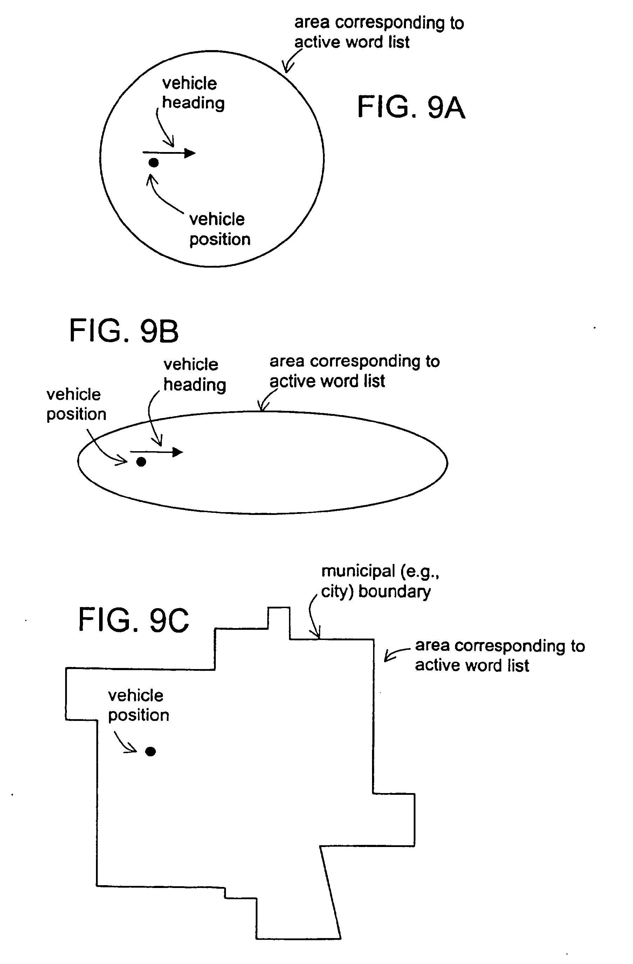

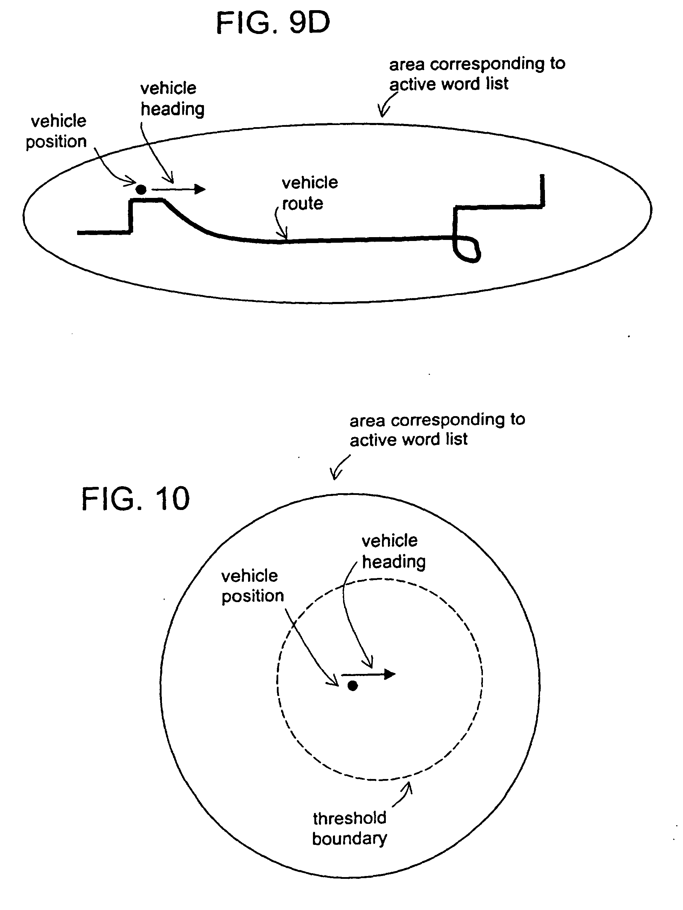

In some of the embodiments disclosed above, the active word list was described as being built to contain the pronunciation data for the geographic features closest to the current vehicle position. In alternative embodiments, the geographic area corresponding to the pronunciation data contained in the active word list can be offset from the current position of the vehicle so that the geographic features represented by the pronunciation data are not necessarily the closest features to the current vehicle position. For example, the geographic area corresponding to the pronunciation data contained in the active word list can be offset in the direction of travel from the current position of the vehicle. According to another alternative, the geographic area corresponding to the pronunciation data contained in the active word list can correspond to an administrative area, such as a city, county or state, in which the vehicle is located. According to another alternative, the geographic area corresponding to the pronunciation data contained in the active word list can be located along a route upon which the vehicle is traveling. Some of these alternatives are illustrated in Figures 9A-9D.

In some of the embodiments disclosed above, the threshold boundary was related to the boundary of the area corresponding to the named geographic features contained in the active word list. In an alternative embodiment, determination of the threshold boundary can take other factors into account, such as vehicle speed, administrative boundaries, direction, etc. Figure 10 shows an example of how the threshold boundary can be calculated taking into account the direction of travel of the vehicle.

### IV. ADVANTAGES

Several advantages follow from the disclosed embodiments. For example, one advantage is improved performance (as measured by reduced processing time and reduced memory requirements) of ASR algorithms operating in an in-vehicle environment.

It is intended that the foregoing detailed description be regarded as illustrative rather than limiting and that it is understood that the following claims define the scope of the invention.

## Claims

1. A method of providing automatic speech recognition in a navigation system (110), the method comprising the step of:
determining (404) a current position of a vehicle (111) in which the navigation system is installed;
**characterised in that** the method comprises the steps of:
determining (412) whether a distance (D) from the current position of the vehicle to a position associated with a previous build of a speech recognition word list (262) exceeds a threshold (T); and
if the distance exceeds the threshold, forming a new speech recognition word list during runtime by adding names of geographic features located in proximity to the current position of the vehicle.

2. The method of Claim 1 wherein the new speech recognition word list also includes names of a predetermined collection of geographic features selected without regard to proximity to the current position of the vehicle.

3. The method of Claim 2 wherein the predetermined collection of geographic features selected without regard to proximity to the current position of the vehicle include popular or important destinations.

4. The method of Claim 1 further comprising:
continuing to determine the current position of the vehicle as the vehicle travels along roads in a geographic area.

5. The method of Claim 1 wherein the speech recognition word list contains a subset of all available names for geographic features located in a geographic area represented by a geographic database.

6. The method of Claim 1 further comprising:
determining a location associated with the new speech recognition word list.

7. The method of Claim 1, in which the step of adding comprises adding names of geographic features located in proximity to the current position of the vehicle to a plurality of words that correspond to a collection of geographic features selected without regard to proximity to the current position of the vehicle.

8. The method of Claim 7 wherein the plurality of words that correspond to the collection of geographic features selected without regard to proximity to the current position of the vehicle include popular or important destinations.

9. A navigation system comprising:
a positioning system (124) that determines a current location of a vehicle (111); and
an automatic speech recognition system (260) that matches data representations of words spoken by a user of the vehicle to a word list (262) of data representations of names of geographic features;
**characterised in that** the navigation system comprises:
a word list builder program (300) that operates at runtime to form a new word list of data representations of names of geographic features when the current location of the vehicle is more than a threshold distance (T) from a previous location associated with a prior list of data representations of names.

10. The system of Claim 9 wherein the word list of data representations of names of geographic features includes data representation of those geographic features that are closest to the current location of the vehicle.

11. The system of Claim 10 wherein the word list of data representations of names of geographic features includes data representation of important and popular destinations that are not necessarily close to the current location of the vehicle.

12. The system of Claim 9 wherein the new word list contains only a portion of the data representations of named geographic features contained in a geographic database that represents all the geographic features in an area in which the vehicle is travelling.

13. The system of Claim 9 further comprising:
a geographic database that contains data representations of named geographic features in an area in which the vehicle is travelling; and
a spatial name index that orders names of geographic features by proximity to a specified location.

14. The system of Claim 13 wherein the spatial name index also orders geographic names falling along a vector.

15. The system of Claim 13 wherein the spatial name index also orders geographic names located between two points.

16. The system of Claim 9, wherein:
a first portion of the word list of data representations of spoken names of geographic features includes data representations of spoken names of geographic features selected without regard to proximity to the current location of the vehicle; and
a second portion of the word list of data representations of names of geographic features includes data representation of spoken names of geographic features selected based upon proximity to the current location of the vehicle.

17. The system of claim 9, wherein:
the word list builder program forms the new word list of data representations of names of geographic features while the vehicle is travelling when the current location of the vehicle is more than a threshold distance from a previous location associated with a prior list of data representations of names.

18. A computer program which, when executed by a computer, carries out each of the steps of a method according to any one of claims 1 to 8.

19. A storage medium having stored thereon a computer program according to claim 18.

## Patentansprüche

1. Verfahren einer Bereitstellung einer automatischen Spracherkennung in einem Navigationssystem (110), wobei das Verfahren den folgenden Schritt umfasst:
Bestimmen (404) einer derzeitigen Position eines Fahrzeugs (111), in welches das Navigationssystem eingebaut ist;
**dadurch gekennzeichnet, dass** das Verfahren folgende Schritte umfasst:
Bestimmen (412), ob eine Entfernung (D) von der derzeitigen Position des Fahrzeugs zu einer Position, welche einer vorherigen Version einer Spracherkennungswortliste (262) zugeordnet ist, eine Schwelle (T) übersteigt; und
dann, wenn die Entfernung die Schwelle übersteigt, Bilden einer neuen Spracherkennungswortliste während einer Laufzeit, indem Namen geographischer Merkmale zugefügt werden, welche in der Nähe der derzeitigen Position des Fahrzeugs gelegen sind.

2. Verfahren nach Anspruch 1, wobei die neue Spracherkennungswortliste ebenso Namen einer vorbestimmter Sammlung geographischer Merkmale umfasst, welche ungeachtet der Nähe zu der derzeitigen Position des Fahrzeugs ausgewählt sind.

3. Verfahren nach Anspruch 2, wobei die vorbestimmte Sammlung geographischer Merkmale, welche ungeachtet der Nähe zu der derzeitigen Position des Fahrzeugs ausgewählt sind, beliebte oder wichtige Destinationen umfasst.

4. Verfahren nach Anspruch 1, weiterhin umfassend:
Fortfahren des Bestimmens der derzeitigen Position des Fahrzeugs, während das Fahrzeug entlang von Straßen in einem geographischen Bereich fährt.

5. Verfahren nach Anspruch 1, wobei die Spracherkennungswortliste einen Untersatz aller verfügbaren Namen für geographische Merkmale enthält, welche in einem geographischen Bereich gelegen sind, der von einer geographischen Datenbank repräsentiert wird.

6. Verfahren nach Anspruch 1, weiterhin umfassend:
Bestimmen einer Stelle, welche der neuen Spracherkennungswortliste zugeordnet ist.

7. Verfahren nach Anspruch 1, bei welchem der Schritt des Zufügens das Zufügen von Namen geographischer Merkmale, die in der Nähe zu der derzeitigen Position des Fahrzeugs gelegen sind, zu einer Mehrzahl von Worten umfasst, welche einer Sammlung von geographischen Merkmalen entsprechen, die ungeachtet der Nähe zu der derzeitigen Position des Fahrzeugs ausgewählt sind.

8. Verfahren nach Anspruch 7, wobei die Mehrzahl von Worten, welche der Sammlung geographischer Merkmale entsprechen, die ungeachtet der Nähe zu der derzeitigen Position des Fahrzeugs ausgewählt sind, beliebte oder wichtige Destinationen umfassen.

9. Navigationssystem, umfassend:
ein Positionierungssystem (124), welches eine derzeitige Position des Fahrzeugs (111) bestimmt; und
ein automatisches Spracherkennungssystem (260), welches Datenrepräsentationen von Worten, die von einem Nutzer des Fahrzeugs gesprochen werden, mit einer Wortliste (262) von Datenrepräsentationen von Namen von geographischen Merkmalen abgleicht;
**dadurch gekennzeichnet, dass** das Navigationssystem umfasst:
ein Wortlistenerstellungsprogramm (300), welches bei einer Laufzeit derart arbeitet, dass es eine neue Wortliste von Datenrepräsentationen von Namen von geographischen Merkmalen bildet, wenn sich die derzeitige Position des Fahrzeugs mehr als eine Schwellenentfernung (T) von einer vorherigen Position befindet, welche einer vorherigen Liste von Datenrepräsentationen von Namen zu geordnet ist.

10. System nach Anspruch 9, wobei die Wortliste von Datenrepräsentationen von Namen von geographischen Merkmalen eine Datenrepräsentation jener geographischen Merkmale umfasst, welche am nächsten bei der derzeitigen Position des Fahrzeugs gelegen sind.

11. System nach Anspruch 10, wobei die Wortliste von Datenrepräsentationen von Namen von geographischen Merkmalen eine Datenrepräsentation wichtiger und beliebter Destinationen umfasst, welche sich nicht notwendigerweise in der Nähe der derzeitigen Position des Fahrzeugs befinden.

12. System nach Anspruch 9, wobei die neue Wortliste lediglich einen Abschnitt der Datenrepräsentationen von genannten geographischen Merkmalen enthält, welche in einer geographischen Datenbank enthalten sind, die alle geographischen Merkmale in einem Bereich repräsentiert, in welchem das Fahrzeug gerade fährt.

13. System nach Anspruch 9, weiterhin umfassend:
eine geographische Datenbank, welche Datenrepräsentationen von genannten geographischen Merkmalen in einem Bereich enthält, in welchem das Fahrzeug gerade fährt; und
einen räumlichen Namensindex, welcher Namen geographischer Merkmale nach ihrer Nähe zu einer spezifizierten Stelle ordnet.

14. System nach Anspruch 13, wobei der räumliche Namensindex ebenso geographische Namen ordnet, welche entlang eines Vektor fallen.

15. System nach Anspruch 13, wobei der räumliche Namensindex ebenso geographische Namen ordnet, welche zwischen zwei Punkten gelegen sind.

16. System nach Anspruch 9, wobei:
ein erster Abschnitt der Wortliste von Datenrepräsentationen von gesprochenen Namen geographischer Merkmale Datenrepräsentationen von gesprochenen Namen geographischer Merkmale umfasst, welche ungeachtet der Nähe zu der derzeitigen Position des Fahrzeugs ausgewählt sind; und
ein zweiter Abschnitt der Wortliste von Datenrepräsentationen von Namen geographischer Merkmale eine Datenrepräsentation von gesprochenen Namen geographischer Merkmale umfasst, welche basierend auf der Nähe zu der derzeitigen Position des Fahrzeugs ausgewählt sind.

17. System nach Anspruch 9, wobei:
das Wortlistenerstellungsprogramm die neue Wortliste von Datenrepräsentationen von Namen geographischer Merkmale bildet, während das Fahrzeug gerade fährt, wenn die derzeitige Position des Fahrzeugs sich mehr als eine Schwellenentfernung von einer vorherigen Position befindet, welche einer vorherigen Liste von Datenrepräsentationen von Namen zugeordnet ist.

18. Computerprogramm, welches dann, wenn es von einem Computer ausgeführt wird, jeden der Schritte eines Verfahrens gemäß einem beliebigen der Ansprüche 1 bis 8 ausführt.

19. Speichermittel, welches darauf ein Computerprogramm gemäß Anspruch 18 gespeichert hat.

## Revendications

1. Procédé destiné à procurer une reconnaissance de la parole automatique dans un système de navigation (110), le procédé comprenant l'étape consistant à :
déterminer (404) une position actuelle d'un véhicule (111) dans lequel le système de navigation est installé ;
**caractérisé en ce que** le procédé comprend les étapes consistant à :
déterminer (412) si une distance (D) de la position actuelle du véhicule à une position associée à une construction précédente d'une liste de mots de reconnaissance de la parole (262) dépasse un seuil (T) ; et
si la distance dépasse le seuil, former une nouvelle liste de mots de reconnaissance de la parole au cours du temps d'exécution en ajoutant des noms de points caractéristiques géographiques localisés à proximité de la position actuelle du véhicule.

2. Procédé selon la revendication 1, dans lequel la nouvelle liste de mots de reconnaissance de la parole comprend également les noms d'un ensemble prédéterminé de points caractéristiques géographiques sélectionnés sans prendre en considération la proximité par rapport à la position actuelle du véhicule.

3. Procédé selon la revendication 2, dans lequel l'ensemble prédéterminé de points caractéristiques géographiques sélectionnés sans prendre en considération la proximité par rapport à la position actuelle du véhicule comprend des destinations populaires ou importantes.

4. Procédé selon la revendication 1, comprenant les étapes consistant à :
continuer à déterminer la position actuelle du véhicule lorsque le véhicule se déplace sur des routes dans une zone géographique.

5. Procédé selon la revendication 1, dans lequel la liste de mots de reconnaissance de la parole contient un sous-ensemble de tous les noms disponibles pour les points caractéristiques géographiques situés dans une zone géographique représentée par une base de données géographique.

6. Procédé selon la revendication 1, comprenant en outre l'étape consistant à :
déterminer un emplacement associé à la nouvelle liste de mots de reconnaissance de la parole.

7. Procédé selon la revendication 1, dans lequel l'étape d'ajout comprend l'addition de noms de points caractéristiques géographiques situés à proximité de la position actuelle du véhicule à une pluralité de mots qui correspondent à un ensemble de points caractéristiques géographiques sélectionnés sans prendre en considération la proximité par rapport à la position actuelle du véhicule.

8. Procédé selon la revendication 7, dans lequel la pluralité de mots qui correspondent à l'ensemble de points caractéristiques géographiques sélectionnés sans prendre en considération la proximité par rapport à la position actuelle du véhicule comprennent des destinations populaires ou importantes.

9. Système de navigation comprenant :
un système de positionnement (124) qui détermine un emplacement actuel d'un véhicule (111) ; et
un système de reconnaissance de la parole automatique (260) qui fait correspondre des représentations de données de mots énoncés par un utilisateur du véhicule avec une liste de mots (262) de représentations de données de noms de points caractéristiques géographiques ;
**caractérisé en ce que** le système de navigation comprend :
un programme bâtisseur de liste de mots (300) qui fonctionne au moment du temps d'exécution pour former une nouvelle liste de mots de représentations de données pour des noms de points caractéristiques géographiques lorsque l'emplacement actuel du véhicule est à plus d'une distance seuil (T) d'un emplacement précédent associé à une liste antérieure de représentations de données pour des noms.

10. Système selon la revendication 9, dans lequel la liste de mots de représentations de données pour des noms de points caractéristiques géographiques comprend la représentation de données de ces points caractéristiques géographiques qui sont les plus proches de l'emplacement actuel du véhicule.

11. Système selon la revendication 10, dans lequel la liste de mots de représentations de données de noms de points caractéristiques géographiques comprend la représentation de données de destinations importantes et populaires qui ne sont pas nécessairement proches de l'emplacement actuel du véhicule.

12. Système selon la revendication 9, dans lequel la nouvelle liste de mots ne contient qu'une partie des représentations de données de points caractéristiques géographiques nommés contenus dans une base de données géographiques qui représente tous les points caractéristiques géographiques dans une zone dans laquelle le véhicule est en train de se déplacer.

13. Système selon la revendication 9, comprenant en outre :
une base de données géographiques qui contient des représentations de données de points caractéristiques géographiques nommés dans une zone dans laquelle le véhicule est en train de se déplacer ; et
un index de noms dans l'espace qui ordonne les noms de points caractéristiques géographiques par proximité par rapport à un emplacement spécifié.

14. Système selon la revendication 13, dans lequel l'index de noms dans l'espace ordonne également les noms géographiques qui se trouvent le long d'un vecteur.

15. Système selon la revendication 13, dans lequel l'index de noms dans l'espace ordonne également les noms géographiques situés entre deux points.

16. Système selon la revendication 9, dans lequel :
une première partie de la liste de mots de représentations pour des données de noms énoncés de points caractéristiques géographiques comprend des représentations de données de noms énoncés de caractéristiques géographiques sélectionnées sans prise en considération de la proximité par rapport à l'emplacement actuel du véhicule ; et
une seconde partie de la liste de mots de représentations de données pour des noms de points caractéristiques géographiques comprend la représentation de données de noms énoncés de points caractéristiques géographiques sélectionnés sur la base de la proximité par rapport à l'emplacement actuel du véhicule.

17. Système selon la revendication 9, dans lequel :
le programme bâtisseur de liste de mots forme la nouvelle liste de mots de représentations de données pour des noms de points caractéristiques géographiques alors que le véhicule se déplace, lorsque l'emplacement actuel du véhicule est à plus d'une distance seuil par rapport à un emplacement précédent associé à une liste antérieure de représentations de données de noms.

18. Programme informatique qui, lorsqu'il est exécuté par un ordinateur, exécute chacune des étapes d'un procédé conforme à l'une quelconque des revendications 1 à 8.

19. Support de mémorisation comportant, mémorisé sur celui-ci, un programme informatique selon la revendication 18.
